# FASCICULE DE BREVET EUROPEEN

(11) **EP 1 898 276 B1**
(45) Date de publication et mention de la délivrance du brevet: **16.05.2018**
(21) Numéro de dépôt: 06018660.8
(22) Date de dépôt: 06.09.2006
(51) Int. Cl.: G04B 11/02, G04B 13/02, F16H 1/00

(54) **Engrenage unidirectionnel, notamment pour l' horlogerie**
Unidirektionales Getriebe, insbesondere für Uhren
One-way gear, particularly for timepieces

(43) Date de publication de la demande: 12.03.2008
(73) Titulaire: Chopard Manufacture SA, 2114 Fleurier (CH)
(72) Inventeur: Scheufele, Karl-Friedrich, 1197 Prangins (CH)
(74) Mandataire: Micheli & Cie SA

(56) Documents cités:
- EP-A- 0 362 682
- EP-A- 0 362 697
- DE-A1- 10 350 934
- FR-A- 1 157 102
- GB-A- 1 201 913
- GB-A- 1 256 604

## Description

La présente invention concerne un engrenage unidirectionnel, c'est-à-dire un engrenage dans lequel la rotation d'une roue menée par une roue menante ne peut être effectuée que dans un sens, la rotation des deux roues dans l'autre sens étant bloquée. De tels engrenages sont décrits dans les documents DE 10350934 et FR 1157102.

Dans les engrenages unidirectionnels conventionnels, notamment horlogers, le blocage de la rotation dans un sens s'accompagne souvent d'un coincement par arc-boutement d'une dent d'une roue sur une dent de l'autre roue. Un effort doit donc être produit pour décoincer ces dents lorsque l'on souhaite rétablir la rotation dans l'autre sens.

La présente invention vise à proposer un engrenage unidirectionnel, notamment horloger, qui permette un rétablissement plus aisé de la rotation normale.

A cette fin, il est prévu un engrenage unidirectionnel comprenant une roue dentée menante et une roue dentée menée, dans lequel le flanc arrière des dents de la roue menante comporte un évidement qui définit des première et seconde surfaces du flanc arrière s'intersectant en une arête, la seconde surface est située entre la première surface et un sommet desdites dents, le sommet des dents de la roue menée est une arête définie par des troisième et quatrième surfaces, et en position bloquée de l'engrenage, l'une des dents de la roue menée est en butée contre la première surface de l'une des dents de la roue menante en un point de contact unique défini par le sommet de ladite dent de la roue menée et sensiblement confondu avec l'arête de l'évidemment, caractérisé en ce qu'en position bloquée de l'engrenage, les première et troisième surfaces forment depuis ledit point de contact un angle inférieur à environ 20°.

L'une des causes de l'effet de coincement que l'on observe dans les engrenages unidirectionnels conventionnels est que la zone de contact entre une dent de la roue menante et une dent de la roue menée est trop proche de la ligne reliant les centres des roues, dite « ligne des centres », ce qui provoque un coincement par arc-boutement et déformation élastique des dents. Ce coincement est aussi parfois le résultat de l'usure d'une pointe de la dent de la roue menée ou menante en appui sur la dent de l'autre roue, usure qui tend à rapprocher le point de contact entre ces deux dents de la ligne des centres.

Dans la présente invention, en position bloquée de l'engrenage, la dent de la roue menée et la première surface sont en appui l'une contre l'autre seulement au niveau du sommet de la dent de la roue menée et à proximité de l'arête de l'évidement, c'est-à-dire en un point éloigné de la ligne des centres. De plus, la configuration des dents dans la présente invention permet d'éviter les contacts agressifs pointe sur flanc générateurs d'usure.

Des modes de réalisation particuliers de l'invention sont définis dans les revendications annexées 2 à 12.

D'autres caractéristiques et avantages de la présente invention apparaîtront à la lecture de la description détaillée suivante faite en référence aux dessins annexés dans lesquels :

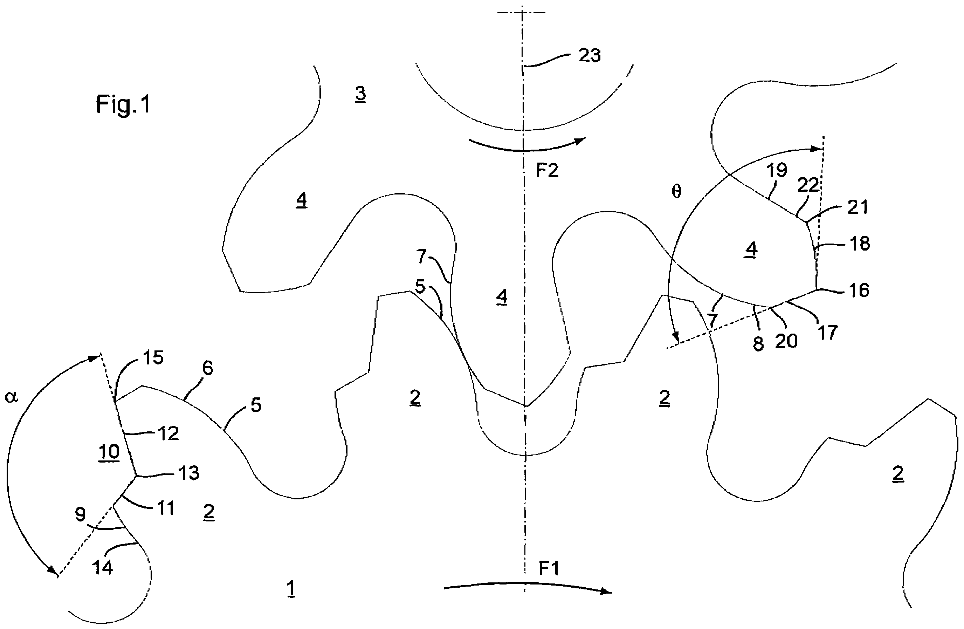

- la figure 1 est une vue partielle d'un engrenage unidirectionnel selon l'invention dans une position de rotation normale,
- la figure 2 est une vue partielle de l'engrenage unidirectionnel selon l'invention dans une position de blocage.

En référence aux figures annexées, un engrenage unidirectionnel selon l'invention comprend une roue menante 1, munie de dents 2 toutes identiques et régulièrement réparties, et une roue menée 3, munie de dents 4 elles aussi toutes identiques et régulièrement réparties. Par « roue » on entend tout organe circulaire rotatif, tel qu'une roue proprement dite ou un pignon.

En fonctionnement normal de l'engrenage, la roue menante 1 tourne dans le sens indiqué par la flèche F1, et une surface principale convexe 5 du flanc avant 6 des dents 2 pousse et glisse sur une surface principale convexe 7 du flanc arrière 8 des dents 4 pour faire tourner la roue menée 3 dans le sens indiqué par la flèche F2.

Le flanc arrière 9 des dents 2 comporte dans sa partie supérieure un évidement 10 qui définit des première et seconde surfaces planes 11, 12 s'intersectant en une arête 13 et formant un angle saillant et obtus α entre elles. La première surface plane 11 forme un palier entre la seconde surface plane 12 et une surface inférieure 14 du flanc arrière 9. La seconde surface plane 12 s'étend de l'arête 13 jusqu'au sommet 15, en forme d'arête, de la dent 2.

Le sommet des dents 4 est une arête 16 formée par l'intersection d'une surface supérieure plane 17 du flanc arrière 8 et d'une surface supérieure légèrement convexe 18 du flanc avant 19 des dents 4. Deux autres arêtes 20 et 21 sont formées sur les dents 4 respectivement par l'intersection entre la surface supérieure plane 17 et la surface principale convexe 7 du flanc arrière 8 et par l'intersection entre la surface supérieure légèrement convexe 18 et une surface principale plane 22 du flanc avant 19.

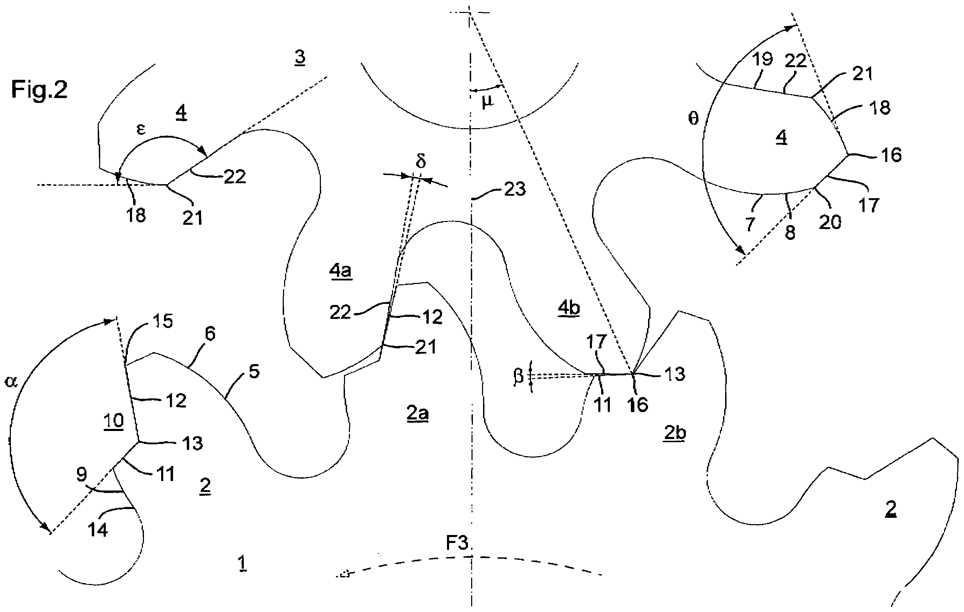

Lorsque la roue menante 1 est entraînée en arrière, c'est-à-dire dans le sens contraire à son sens de rotation normal, comme indiqué par la flèche en pointillés F3 sur la figure 2, le flanc arrière 9 d'une dent 2a pousse le flanc avant 19 d'une dent 4a mais, du fait de la présence de l'évidement 10, la roue menée 3 prend du retard et le sommet 16 d'une dent 4b qui précède immédiatement la dent 4a (dans le sens normal F2) entre dans l'évidement 10 d'une dent 2b qui précède immédiatement la dent 2a (dans le sens normal F1). Comme le palier 11 de la dent 2b se trouve sur le chemin de la dent 4b, cette dernière vient buter contre ce palier 11, ce qui bloque mutuellement les roues 1 et 3. Le contact entre la dent 4b et le palier 11, et même plus généralement entre la dent 4b et la dent 2b, est ponctuel, plus exactement linéaire, le point ou ligne de contact étant défini par le sommet 16 et étant en outre confondu ou presque confondu avec l'arête 13 définie par les surfaces 11 et 12. Dans cette position bloquée de l'engrenage, montrée à la figure 2, la surface plane 17 de la dent 4b fait donc avec le palier 11 un angle β différent de zéro et ouvert vers l'arrière. Cet angle β est choisi suffisamment grand pour que le contact entre les surfaces planes 11 et 17 puisse être considéré comme ponctuel (linéaire) et suffisamment petit pour que le sommet 16 des dents 4 ne soit pas trop pointu, c'est-à-dire pour que l'angle θ défini par les surfaces 17 et 18 depuis le sommet 16 soit suffisamment grand. L'angle β peut typiquement être compris entre environ 2° et environ 20°. Dans l'exemple illustré, il est d'environ 2°.

On voit qu'ainsi le contact entre les dents 2b et 4b s'effectue en un unique point ou ligne 16 qui est éloigné de la ligne 23 reliant les centres des roues 1 et 3, c'est-à-dire qui est situé à une grande distance angulaire µ de la ligne 23 mesurée par exemple depuis le centre de la roue menée 3. Le risque que la dent 4b se coince sur la dent 2b pendant le blocage du fait de l'élasticité des roues 1, 3 est donc réduit, ce qui favorise un rétablissement aisé de la rotation de la roue 1 dans le sens normal F1. On notera aussi que l'orientation du palier 11 est telle que celui-ci n'entraîne pas la dent 4b lors du rétablissement de la rotation normale de la roue 1.

Un autre avantage de l'invention est que la force d'appui du palier 11 sur le sommet 16 est exercée du côté de la surface 17, et donc dans une direction éloignée de la direction radiale de la roue 3 passant par le sommet 16. Ceci limite l'usure subie par le sommet 16 au fur et à mesure des utilisations de l'engrenage. Ce dernier effet est encore renforcé par le fait que l'angle θ défini entre les surfaces 17, 18 peut être important, typiquement supérieur à 90°. On observera à cet égard que la forme convexe de la surface 18 permet l'obtention d'un angle θ plus grand sans gêner la coopération entre les dents 2a et 4a.

Comme on le voit également sur la figure 2, en position bloquée de l'engrenage, la dent 2a est en contact avec la dent 4a en un point ou ligne unique défini par l'arête 21 et la surface plane 12, et les surfaces 12 et 22 font donc entre elles un angle δ différent de zéro et ouvert vers l'intérieur de la roue menée 3, Cet angle δ est suffisamment grand pour que le contact entre les surfaces 12 et 22 puisse être considéré comme ponctuel (linéaire) et suffisamment petit pour que l'arête 21 ne soit pas trop vive, c'est-à-dire pour que l'angle ε défini par les surfaces 18 et 22 depuis l'arête 21 soit suffisamment grand. L' angle δ est typiquement compris entre environ 2° et environ 20°. Dans l'exemple illustré, il est d'environ 2°. Cette configuration des surfaces 12 et 22 évite tout contact agressif pointe sur flanc lors du blocage et permet à la dent 2a de se libérer sans effort de la dent 4a lors du rétablissement de la rotation normale.

Outre les avantages mentionnés plus haut, on appréciera que les roues 1, 3 selon l'invention peuvent être réalisées à partir de roues normalisées. La présente invention ne nécessite pas l'utilisation de roues comportant des dents différentes les unes des autres ou espacées irrégulièrement.

## Revendications

1. Engrenage unidirectionnel comprenant une roue dentée menante (1) et une roue dentée menée (3), dans lequel le flanc arrière (9) des dents (2) de la roue menante (1) comporte un évidement (10) qui définit des première et seconde surfaces (11, 12) du flanc arrière (9) s'intersectant en une arête (13), la seconde surface (12) est située entre la première surface (11) et un sommet (15) desdites dents (2), le sommet (16) des dents (4) de la roue menée (3) est une arête définie par des troisième et quatrième surfaces (17, 18), et en position bloquée de l'engrenage l'une (4b) des dents de la roue menée (3) est en butée contre la première surface (11) de l'une (2b) des dents de la roue menante (1) en un point de contact unique défini par le sommet (16) de ladite dent (4b) de la roue menée (3) et sensiblement confondu avec l'arête (13) de l'évidement (10), **caractérisé en ce qu'**en position bloquée de l'engrenage, les première et troisième surfaces (11, 17) forment depuis ledit point de contact (16) un angle (β) inférieur à environ 20°.

2. Engrenage unidirectionnel selon la revendication 1, **caractérisé en ce que** les première et troisième surfaces (11, 17) sont planes.

3. Engrenage unidirectionnel selon la revendication 1 ou 2, **caractérisé en ce qu'**en position bloquée de l'engrenage, les première et troisième surfaces (11, 17) forment depuis ledit point de contact (16) un angle (β) d'environ 2°.

4. Engrenage unidirectionnel selon l'une quelconque des revendications 1 à 3, **caractérisé en ce que** la seconde surface (12) est plane.

5. Engrenage unidirectionnel selon l'une quelconque des revendications 1 à 4, **caractérisé en ce que** la quatrième surface (18) est convexe.

6. Engrenage unidirectionnel selon l'une quelconque des revendications 1 à 5, **caractérisé en ce que** les première et seconde surfaces (11, 12) forment depuis l'arête (13) de l'évidement (10) un angle (α) obtus.

7. Engrenage unidirectionnel selon l'une quelconque des revendications 1 à 6, **caractérisé en ce que** les troisième et quatrième surfaces (17, 18) forment depuis le sommet (16) des dents (4) de la roue menée (3) un angle (θ) obtus.

8. Engrenage unidirectionnel selon l'une quelconque des revendications 1 à 7, **caractérisé en ce que** la troisième surface (17) forme une arête (20) avec une autre surface (7) du flanc arrière (8) des dents (4) de la roue menée (3) et la quatrième surface (18) forme une arête (21) avec une autre surface (22) du flanc avant (19) des dents (4) de la roue menée (3).

9. Engrenage unidirectionnel selon la revendication 8, **caractérisé en ce qu'**en position bloquée, la seconde surface (12) d'une autre dent (2a) de la roue menante (1) est en appui sur une autre dent (4a) de la roue menée (3) en un unique point de contact défini par l'arête (21) formée par la quatrième surface (18) et l'autre surface (22) du flanc avant (19) de cette autre dent (4a) de la roue menée (3).

10. Engrenage unidirectionnel selon la revendication 9, **caractérisé en ce qu'**en position bloquée, l'autre surface (22) du flanc avant (19) de l'autre dent (4a) de la roue menée (3) forme avec la seconde surface (12) de l'autre dent (2a) de la roue menante (1), depuis ledit point de contact (21), un angle (δ) inférieur à environ 20°.

11. Engrenage unidirectionnel selon la revendication 10, **caractérisé en ce qu'**en position bloquée, l'autre surface (22) du flanc avant (19) de l'autre dent (4a) de la roue menée (3) forme avec la seconde surface (12) de l'autre dent (2a) de la roue menante (1), depuis ledit point de contact (21), un angle (δ) d'environ 2°.

12. Engrenage unidirectionnel selon l'une quelconque des revendications 8 à 11, **caractérisé en ce que** l'autre surface (22) du flanc avant (19) des dents (4) de la roue menée (3) est plane.

## Patentansprüche

1. Unidirektionales Getriebe, das ein führendes Zahnrad (1) und ein geführtes Zahnrad (3) umfasst, wobei die hintere Flanke (9) der Zähne (2) des führenden Rades (1) eine Aushöhlung (10) umfasst, die erste und zweite Flächen (11, 12) der hinteren Flanke (9) definiert, die sich in einer Kante (13) schneiden, wobei die zweite Fläche (12) sich zwischen der ersten Fläche (11) und einer Spitze (15) der Zähne (2) befindet, wobei die Spitze (16) der Zähne (4) des geführten Rades (3) eine Kante ist, die durch dritte und vierte Flächen (17, 18) definiert ist, und in der gesperrten Stellung des Getriebes ein (4b) von den Zähnen des geführten Rades (3) gegen die erste Fläche (11) von einem (2b) von den Zähnen des führenden Rades (1) an einem einzigen Kontaktpunkt, der durch die Spitze (16) des Zahnes (4b) des geführten Rades (3) definiert ist und im Wesentlichen mit der Kante (13) der Aushöhlung (10) identisch ist, im Anschlag ist, **dadurch gekennzeichnet, dass** in der gesperrten Stellung des Getriebes die erste und die dritte Fläche (11, 17) ausgehend von dem Kontaktpunkt (16) einen Winkel (β) bilden, der kleiner als ungefähr 20° ist.

2. Unidirektionales Getriebe nach Anspruch 1, **dadurch gekennzeichnet, dass** die erste und die dritte Fläche (11, 17) eben sind.

3. Unidirektionales Getriebe nach Anspruch 1 oder 2, **dadurch gekennzeichnet, dass** in der gesperrten Stellung des Getriebes die erste und die dritte Fläche (11, 17) ausgehend von dem Kontaktpunkt (16) einen Winkel (β) von ungefähr 2° bilden.

4. Unidirektionales Getriebe nach einem der Ansprüche 1 bis 3, **dadurch gekennzeichnet, dass** die zweite Fläche (12) eben ist.

5. Unidirektionales Getriebe nach einem der Ansprüche 1 bis 4, **dadurch gekennzeichnet, dass** die vierte Fläche (18) konvex ist.

6. Unidirektionales Getriebe nach einem der Ansprüche 1 bis 5, **dadurch gekennzeichnet, dass** die erste und die zweite Fläche (11, 12) ausgehend von der Kante (13) der Aushöhlung (10) einen stumpfen Winkel (α) bilden.

7. Unidirektionales Getriebe nach einem der Ansprüche 1 bis 6, **dadurch gekennzeichnet, dass** die dritte und die vierte Fläche (17, 18) ausgehend von der Spitze (16) der Zähne (4) des geführten Rades (3) einen stumpfen Winkel (θ)bilden.

8. Unidirektionales Getriebe nach einem der Ansprüche 1 bis 7, **dadurch gekennzeichnet, dass** die dritte Fläche (17) eine Kante (20) mit einer anderen Fläche (7) der hinteren Flanke (8) der Zähne (4) des geführten Rades (3) bildet und die vierte Fläche (18) eine Kante (21) mit einer anderen Fläche (22) der vorderen Flanke (19) der Zähne (4) des geführten Rades (3) bildet.

9. Unidirektionales Getriebe nach Anspruch 8, **dadurch gekennzeichnet, dass** in der gesperrten Stellung die zweite Fläche (12) eines anderen Zahnes (2a) des führenden Rades (1) auf einem anderen Zahn (4a) des geführten Rades (3) an einem einzigen Kontaktpunkt, der durch die Kante (21) definiert ist, die durch die vierte Fläche (18) und die andere Fläche (22) der vorderen Flanke (19) dieses anderen Zahnes (4a) des geführten Rades (3) gebildet ist, in Auflage ist.

10. Unidirektionales Getriebe nach Anspruch 9, **dadurch gekennzeichnet, dass** in der gesperrten Stellung die andere Fläche (22) der vorderen Flanke (19) des anderen Zahnes (4a) des geführten Rades (3) mit der zweiten Fläche (12) des anderen Zahnes (2a) des führenden Rades (1) ausgehend von dem Kontaktpunkt (21) einen Winkel (δ) bildet, der kleiner als ungefähr 20° ist.

11. Unidirektionales Getriebe nach Anspruch 10, **dadurch gekennzeichnet, dass** in der gesperrten Stellung die andere Fläche (22) der vorderen Flanke (19) des anderen Zahnes (4a) des geführten Rades (3) mit der zweiten Fläche (12) des anderen Zahnes (2a) des führenden Rades (1) ausgehend von dem Kontaktpunkt (21) einen Winkel (δ) von ungefähr 2° bildet.

12. Unidirektionales Getriebe nach einem der Ansprüche 8 bis 11, **dadurch gekennzeichnet, dass** die andere Fläche (22) der vorderen Flanke (19) der Zähne (4) des geführten Rades (3) eben ist.

## Claims

1. Unidirectional gear comprising a toothed driving wheel (1) and a toothed driven wheel (3), wherein the trailing flank (9) of the teeth (2) of the driving wheel (1) includes a recess (10) defining first and second surfaces (11, 12) of the trailing flank (9) that intersect in an edge (13), the second surface (12) is situated between the first surface (11) and an apex (15) of said teeth (2), the apex (16) of the teeth (4) of the driven wheel (3) is an edge defined by third and fourth surfaces (17, 18), and in the blocked position of the gear, one (4b) of the teeth of the driven wheel (3) abuts against the first surface (11) of one (2b) of the teeth of the driving wheel (1) in a unique point of contact defined by the apex (16) of said tooth (4b) of the driven wheel (3) and substantially coincident with the edge (13) of the recess (10), **characterised in that** in the blocked position of the gear, the first and third surfaces (11, 17) form an angle (β) smaller than about 20° at said point of contact (16).

2. Unidirectional gear according to claim 1, **characterised in that** the first and third surfaces (11, 17) are plane.

3. Unidirectional gear according to claim 1 or 2, **characterised in that** in the blocked position of the gear, the first and third surfaces (11, 17) form an angle (β) of about 2° at said point of contact (16).

4. Unidirectional gear according to any of claims 1 to 3, **characterised in that** the second surface (12) is plane.

5. Unidirectional gear according to any of claims 1 to 4, **characterised in that** the fourth surface (18) is convex.

6. Unidirectional gear according to any of claims 1 to 5, **characterised in that** the first and second surfaces (11, 12) form an obtuse angle (α) at the edge (13) of the recess (10).

7. Unidirectional gear according to any of claims 1 to 6, **characterised in that** the third and fourth surfaces (17, 18) form an obtuse angle (θ)at the apex (16) of the teeth (4) of the driven wheel (3).

8. Unidirectional gear according to any of claims 1 to 7, **characterised in that** the third surface (17) forms an edge (20) with another surface (7) of the trailing flank (8) of the teeth (4) of the driven wheel (3), and the fourth surface (18) forms an edge (21) with another surface (22) of the leading flank (19) of the teeth (4) of the driven wheel (3).

9. Unidirectional gear according to claim 8, **characterised in that** in the blocked position, the second surface (12) of another tooth (2a) of the driving wheel (1) rests against another tooth (4a) of the driven wheel (3) in a unique point of contact defined by the edge (21) formed by the fourth surface (18) and the other surface (22) of the leading flank (19) of this other tooth (4a) of the driven wheel (3).

10. Unidirectional gear according to claim 9, **characterised in that** in the blocked position, the other surface (22) of the leading flank (19) of the other tooth (4a) of the driven wheel (3) forms an angle (δ) smaller than about 20° with the second surface (12) of the other tooth (2a) of the driving wheel (1) at said point of contact (21).

11. Unidirectional gear according to claim 10, **characterised in that** in the blocked position, the other surface (22) of the leading flank (19) of the other tooth (4a) of the driven wheel (3) forms an angle (δ) of about 2° with the second surface (12) of the other tooth (2a) of the driving wheel (1) at said point of contact (21).

12. Unidirectional gear according to any of claims 8 to 11, **characterised in that** the other surface (22) of the leading flank (19) of the teeth (4) of the driven wheel (3) is plane.
